# EUROPÄISCHE PATENTSCHRIFT

(11) **EP 1 836 429 B1**
(45) Veröffentlichungstag und Bekanntmachung des Hinweises auf die Patenterteilung: **29.07.2009**
(21) Anmeldenummer: 06700389.7
(22) Anmeldetag: 06.01.2006
(51) Int. Cl.: F16L 27/08

(54) **FÜHRUNG EINER POLYMERSCHMELZE MIT ROHRDREHGELENK**
GUIDE OF A MOLTEN POLYMERIC MASS AND TUBULAR ROTARY JOINT
AMENAGEMENT DE MATIERE POLYMERE FONDUE ET ARTICULATION TOURNANTE DE TUBE

(30) Priorität: 13.01.2005 DE 102005001557
(43) Veröffentlichungstag der Anmeldung: 26.09.2007
(73) Patentinhaber: Oerlikon Textile GmbH & Co. KG, 42897 Remscheid (DE)
(72) Erfinder: SCHÜTT, Günter, 24539 Neumünster (DE); BECK, Arnold, 24539 Neumünster (DE)
(74) Vertreter: Kahlhöfer, Hermann
(86) Internationale Anmeldenummer: PCT/EP2006/000071
(87) Internationale Veröffentlichungsnummer: WO 2006/074876

(56) Entgegenhaltungen:
- DE-U- 7 000 900
- US-A- 2 768 843
- US-A- 5 193 915

## Beschreibung

Die Erfindung betrifft eine Führung einer Polymerschmelze mit Rohrdrehgelenk gemäß dem Oberbegriff des Anspruchs 1.

Bei der Verlegung und Konstruktion von Rohrleitungen ist es bekannt, Drehbeweglichkeiten von Rohrstücken durch sogenannte Rohrdrehgelenke zu ermöglichen. Ein derartiges Rohrdrehgelenk ist beispielsweise aus der DE 70 00 900 U bekannt. Hierbei wirken ein Halter und ein drehbar mit dem Halter verbundener Anschlusskörper zusammen, um ein mit dem Anschlusskörper verbundenes Rohrstück relativ zum Halter beweglich zu gestalten. Innerhalb des Halters ist eine Verteilkammer vorgesehen, die mit einem Verteilerkanal des Anschlusskörpers gekoppelt ist. Um die Drehbewegung des Anschlusskörpers zu ermöglichen, wird bei der bekannten Vorrichtung eine Gleitlagerung eingesetzt. Ein derartiges System ist nur für höhere Temperaturen mit mittlerer Druckbelastung einsetzbar. Bei der Führung von Polymerschmelzen treten jedoch neben hohen Temperaturen gleichzeitig hohe Drücke auf, die zu entsprechend hohen Radial- und Axialkräften führen. Derartige hohe Druckkräfte lassen sich jedoch nicht durch Gleitlager, insbesondere in der bekannten Bauart aufnehmen.

Im Stand der Technik sind hierzu ebenfalls Rohrdrehgelenke bekannt, bei welchen die Gleitlagerung durch Wälzlager ersetzt sind. Damit lassen sich zwar hohe Drücken realisieren, jedoch sind erfahrungsgemäß Wälzlager für hohe Temperaturen nur bedingt geeignet. Ein weiteres Problem der im Stand der Technik bekannten Rohrdrehgelenke liegt darin, dass eine leichtgängige Drehbarkeit des Anschlusskörpers in dem Halter bei hohen Drücken nicht gewährleistet bleibt. Insbesondere sind dabei einseitig wirkende Kräfte an dem Anschlusskörper besonders nachteilig.

Schließlich ist aus der gattungsbildenden US 5,193,915, welche keine spezifische Angabe bezüglich Druck oder Temperatur enthält, eine Vorrichtung zur Zuführung eines unter Druck stehenden Fluids von einem stationären Gehäuse zu einer drehbaren Welle bekannt. Diese Vorrichtung ist jedoch aufwändig und aufgrund der stark verzweigten Führungskanäle, die zudem geringe Querschnitte aufweisen, nicht zur Leitung von Kunststoffschmelzen geeignet.

Es ist nun Aufgabe der Erfindung eine Führung mit Rohrdrehgelenk der gattungsgemäßen Art zur Führung einer Polymerschmelze derart weiterzubilden, so dass eine sichere Funktionsfähigkeit auch bei hohen Temperaturen von oberhalb 250°C und hohen Drücken von oberhalb 200 bar gewährleistet ist.

Diese Aufgabe wird erfindungsgemäß durch eine Führung umfassend ein Rohrdrehgelenk mit den Merkmalen nach Anspruch 1 gelöst.

Vorteilhafte Weiterbildungen der Erfindung sind durch die Merkmale und Merkmalskombinationen der Unteransprüche definiert.

Der besondere Vorteil der Erfindung liegt darin, dass die Verbindung zwischen dem Halter und dem Anschlusskörper durch eine Wellnabenverbindung ausgestaltet ist. Hierzu weist der Anschlusskörper einen Wellenzapfen auf, der in einer Lagerbohrung des Halter gelagert ist. Die Lagerbohrung durchdringt die Verteilerkammer, so dass einseitige Belastungen an dem Anschlusskörper resultierend aus den Fluiddrücken innerhalb der Verteilerkammer vermieden werden.

Besonders vorteilhaft ist hierbei die Weiterbildung des Rohrdrehgelenkes, bei welchem die Lagerbohrung zur Bildung von zwei Lagerstellen den Halter vollständig durchdringt, so dass in beiden Stellen annährend gleiche Druckkräfte an dem Wellenzapfen wirken. Bevorzugt ist die Lagerbohrung in den Lagerstellen mit gleich großem Durchmesser ausgebildet, so dass sich die an dem Wellenzapfen wirkenden Drücke kompensieren.

Dabei sind den Lagerstellen zur Abdichtung der Verteilerkammer vorteilhaft Dichtungen zwischen dem Halter und dem Wellenzapfen zugeordnet.

Die Dichtungen in den Lagerstellen werden bevorzugt durch temperaturbeständige Stopfenbuchspackungen gebildet. Dabei ist besonders vorteilhaft, wenn die Stopfbuchspackungen durch ein verstellbares Vorspannmittel gehalten sind, um einerseits eine völlige Abdichtung der Verteilerkammer zu ermöglichen. Andererseits ist es bei der Führung von Polymerschmelzen besonders vorteilhaft, wenn eine geringe Menge des Polymers zu beiden Seiten der Verteilerkammer aus den Lagerstellen herausgeführt werden kann, um beispielsweise abgebautes Polymermaterial abzuführen.

In Verbindung mit Gleitlagerungen werden auch bevorzugt Spaltdichtungen zwischen dem Wellenzapfen und dem Halter realisiert.

Die Lagerung des Wellenzapfens erfolgt vorzugsweise durch eine Gleitlagerabstützung, um somit geringe Spiele der Wellenlagerung im Bereich von <0,15 mm im Durchmesser realisieren zu können.

Um in jeder Stellung des Anschlusskörpers die Verbindung zwischen der Verteilkammer des Halters und dem Verteilerkanal des Anschlußkörpers zu gewährleisten, ist gemäß einer vorteilhaften Weiterbildung die Verteilerkammer innerhalb des Halters durch eine den Wellenzapfen im wesentlichen konzentrisch umschließende Nut gebildet. Somit steht am Umfang des Wellenzapfens jeweils eine ausreichende Menge an Fluid zur Verfügung, um in dem am Anschlusskörper eingebrachten Verteilerkanal zu gelangen.

Die Verteilerkammer lasst sich jedoch auch vorteilhaft durch eine umlaufende Eindrehung an dem Wellenzapfen ausbilden. Je nach Durchmesser des Wellenabschnitts mit Eindrehung kann die Verteilerkammer innerhalb oder außerhalb der Lagerbohrung konzentrisch zur Lagerbohrung ausgebildet werden, so dass bei Drehung des Wellenzapfens immer eine gleichmäßige Verteilung und Führung der Schmelze gewährleistet ist.

Die Ausbildung des Verteilerkanals lässt sich dabei vorteilhaft in dem Anschlusskörper durch eine Sacklochbohrung vom Anschlussende bis zum Wellenzapfen hin ausbilden. Die Sacklochbohrung ist an dem geschlossenen Bohrende im Wellenzapfen durch eine Querbohrung mit der außen liegenden Verteilkammer verbunden. Hierbei lassen sich Formgebung der Querbohrung und der Sacklochbohrung derart ausbilden, dass möglichst geringe Druckverlust beim Durchströmen des Rohrdrehgelenkes entstehen.

Gemäß einer vorteilhaften Weiterbildung des Rohrdrehgelenkes lässt sich der Verteilerkanal des Anschlusskörpers durch eine Durchgangsbohrung vom Anschlussende bis zu einem zweiten gegenüberliegenden Anschlussende bilden, wobei im Bereich des Wellenzapfens die Durchgangsbohrung durch eine Querbohrung mit der Verteilerkammer verbunden ist. Durch diese Weiterbildung der Erfindung lassen sich gleich zwei an dem Drehgelenk angeschlossene Rohrstücke gleichzeitig mit dem Fluid versorgen.

Die Erfindung wird nachfolgend anhand einiger Ausführungsbeispiele des Rohrdrehgelenkes unter Hinweis auf die beigefügten Zeichnungen näher beschrieben.

Es stellen dar:
- Fig. 1: schematisch eine Längsschnittansicht eines ersten Ausführungsbeispiels des erfindungsgemäßen Rohrdrehgelenkes
- Fig. 2: schematisch eine Querschnittsansicht des Ausführungsbeispiels aus Fig. 1
- Fig. 3: schematisch eine Längsschnittansicht eines weiteren Ausführungsbeispiels eines erfindungsgemäßen Rohrdrehgelenkes
- Fig. 4 und Fig. 5: schematisch Längsschnittansichten weiterer Ausführungsbeispiele des erfindungsgemäßen rohdrehgelenkes

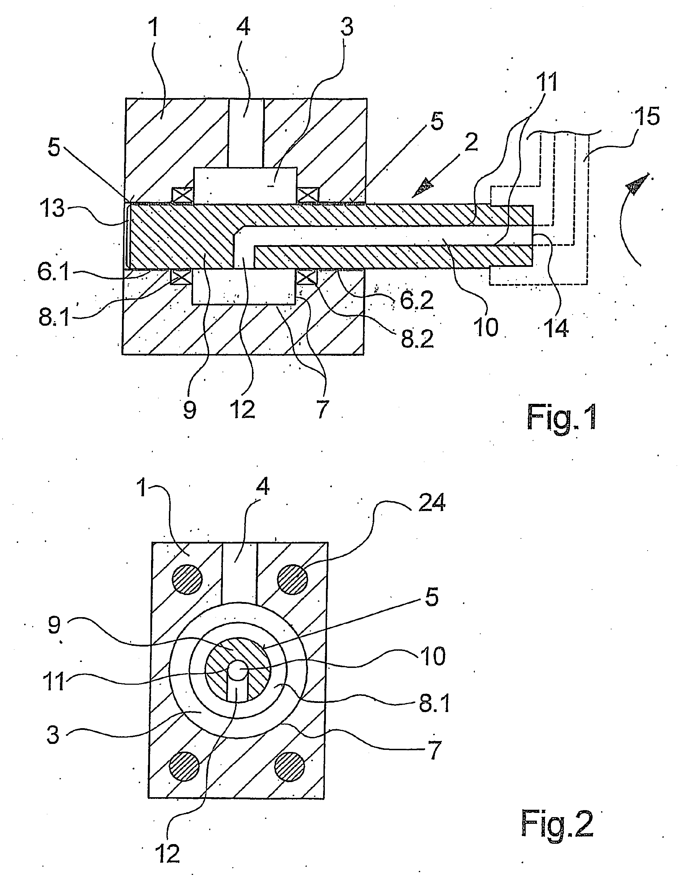

In den Fig. 1 und 2 ist ein erstes Ausführungsbeispiel eines Rohrdrehgelenkes in mehreren Ansichten dargestellt. Fig. 1 zeigt das Ausführungsbeispiel in einer Längsschnittansicht und Fig. 2 das Ausführungsbeispiel in einer Querschnittsansicht. Insoweit kein ausdrücklicher Bezug zu einer der Figuren gemacht ist, gilt die nachfolgende Beschreibung für beide Figuren.

Das Rohrdrehgelenk weist einen quaderförmigen Halter 1 auf. In dem Halter 1 ist eine Verteilerkammer 3 ausgebildet, die mit einem Zulauf 4 verbunden ist. Der Zulauf 4 ist an der Oberseite des Halters 1 ausgebildet und lässt sich mit einem hier nicht dargestellten Rohrstück verbinden.

Im mittleren Bereich des Halters 1 ist eine quer zum Zulauf 4 gerichtete Lagerbohrung 5 in dem Halter 1 angebracht. Die Lagerbohrung 5 durchdringt die Verteilerkammer 3 und die angrenzenden Seitenwandungen des Halter 1. Die Verteilerkammer 3 ist durch eine umlaufende Nut 7 im wesentlichen konzentrisch zu der Lagerbohrung 5 innerhalb des Halters 1 ausgebildet. In der Lagerbohrung 5 des Halters 1 ist ein Anschlusskörper 2 drehbar gelagert. Hierzu ist ein Lagerende 13 des Anschlusskörpers 2 als ein Wellenzapfen 9 ausgebildet, der in den Lagerstellen 6.1 und 6.2 des Halters 1 drehbar gelagert ist. Mit einem Anschlussende 14 ragt der Anschlusskörper 2 seitlich aus der Lagerbohrung 5 des Halters 1 heraus. An dem freien Ende des Anschlussendes 14 ist ein Rohrstück 15 angekoppelt. Innerhalb des Anschlusskörpers 2 ist ein Verteilerkanal 10 durch eine Sacklochbohrung 11 vom Anschlussende 14 in Richtung des Lagerendes 13 eingebracht. Die Sacklochbohrung 11 weist im Bereich des Wellenzapfens 9 eine Querbohrung 12 auf, durch welche die Sacklochbohrung 11 mit der Verteilerkammer 3 verbunden ist.

Wie in Fig. 2 dargestellt, ist die Nut 7 zur Bildung der Verteilerkammer 3 in dem Halter 1 im wesentlichen konzentrisch zu dem Umfang des Wellenzapfens 9 ausgebildet, so dass in jeder Stellung des Wellenzapfens 9 eine Verbindung zwischen der Verteilerkammer 3 und dem Verteilerkanal 10 vorhanden ist.

In dem Halter 1 sind mehrere Heizelemente 24 integriert, die eine Beheizung der schmelzeführenden Bereich in dem Rohrdrehgelenk bewirken.

Aus Fig. 1 ist ersichtlich, dass in den Lagerstellen 6.1 und 6.2 Dichtungen 8.1 und 8.2 zwischen dem Wellenzapfen 9 und dem Halter 1 angeordnet sind, so dass die Verteilerkammer 3 nach außen hin abgedichtet ist. Zusätzlich wirken an dem Wellenzapfen 9 hier nicht dargestellte Mittel zur axialen Sicherung, damit keine unzulässige axiale Beweglichkeit des Anschlusskörpers 2 auftritt.

Bei dem in Fig. 1 und 2 dargestellten Ausführungsbeispiel wird eine hochtemperierte Polymerschmelze unter Hochdruck über den Zulauf 4 in die Verteilerkammer 3 gefördert. Von der Verteilerkammer 3 gelangt die Polymerschmelze in die Querbohrung 12 zur Sacklochbohrung 11. Der dadurch gebildete Verteilerkanal 10 führt die Polymerschmelze sodann zu dem angeschlossenen Rohrstück 15. Hierbei lässt sich das Rohrstück 15 um den als Achse wirkenden Wellenzapfen 9 relativ zum Halter 1 verdrehen. Dabei sind Drehwinkel im Bereich von 360° und darüber möglich.

Die Lagerstellen 6.1 und 6.2 sind in diesem Ausführungsbeispiel als Gleitstützlager ausbildet, wobei die Lagerspiele im Durchmesser max. 0,15 mm betragen. Damit ist eine Drehbarkeit des Wellenzapfens 9 auch bei höheren Temperaturen möglich

Die Lagerstellen 6.1 und 6.2 könnten jedoch durch eine Lagerbuchse oder ggf. durch Wälzlager ausgebildet sein. Grundsätzlich ist die symmetrische Ausbildung des Wellenzapfens in zwei Lagerstellen bei dem erfindungsgemäßen Rohrdrehgelenk besonders vorteilhaft, da im wesentlichen ausgeglichene Druckkräfte an dem Anschlusskörper 2 wirken und somit die Leichtgängigkeit der Drehbewegung des Wellenzapfens 9 auch bei höheren Drücken erhalten bleibt. Die in dem Ausführungsbeispiel nach Fig. 1 und Fig. 2 vorgesehen Dichtung zur Abdichtung der Verteilerkammer ist beispielhaft. Zur Abdichtung lässt sich Ort und Art der Dichtung frei wählen. So könnten Spaltdichtungen zwischen dem Wellenzapfen und dem Halter ausgebildet sein, so dass zusätzliche Dichtmittel entbehrlich wären.

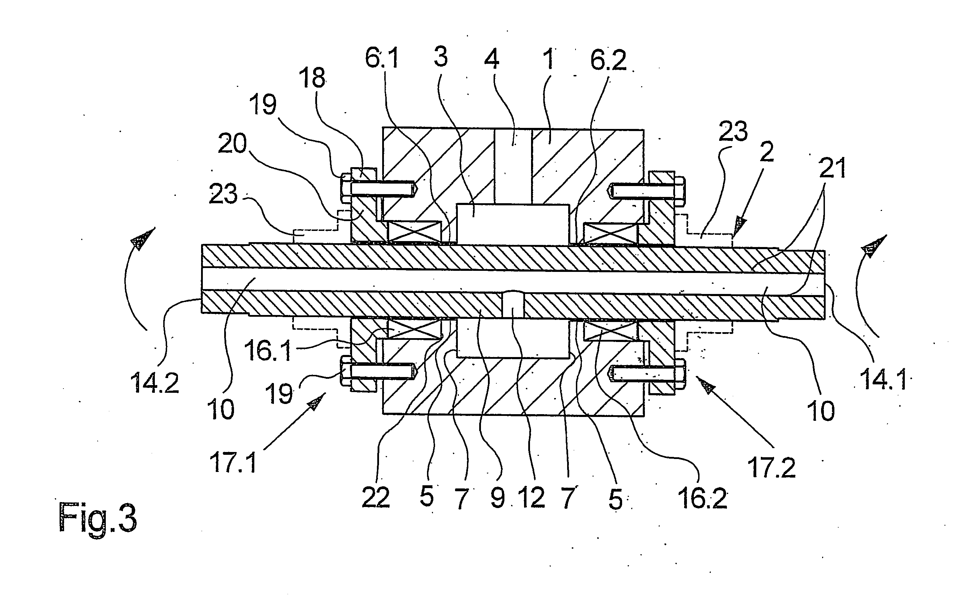

In Fig. 3 ist ein weiteres Ausführungsbeispiel des erfindungsgemäßen Rohrdrehgelenkes dargestellt. Hierbei ist das Ausführungsbeispiel in einer Längsschnittansicht gezeigt, wobei die Querschnittansicht im wesentlichen identisch ist zu dem Ausführungsbeispiel nach Fig. 2 ist.

Das Rohrdrehgelenk besteht aus einem Halter 1 und einem in dem Halter 1 gelagerten Anschlusskörper 2. Hierbei ist der Halter 1 mit einer Verteilkammer 3, die über einen Zulauf 4 mit einem externen Rohrstück verbindbar ist, ausgebildet. Die Verteilerkammer 3 ist als Nut 7 konzentrisch zu dem Wellenzapfen 9 gebildet und wird durch eine Lagerbohrung 5 durchdrungen, die die Wandungen des Halters 1 vollständig durchdringt. In der Lagerbohrung 5 ist ein Wellenzapfen 9 in den Lagerstellen 6.1 und 6.2 des Halters 1 drehbar gelagert. Der Wellenzapfen 9 weist zu beiden Seiten jeweils ein Anschlussende 14.1 und 14.2 auf, an welchem ein Rohrstück ankoppelbar ist. Der so gebildete Anschlusskörper 2 wird durch eine Durchgangsbohrung 21 durchdrungen, die im Bereich des Wellenzapfens 9 innerhalb der Verteilerkammer 3 mit einer Querbohrung 12 den Verteilerkanal 10 bildet.

In den Lagerstellen 6.1 und 6.2 ist jeweils eine Stopfbuchspackung 16.1 und 16.2 zwischen dem Wellenzapfen 9 und dem Halter 1 angeordnet. Konzentrisch zu dem Wellenzapfen 9 ist zu beiden Seiten des Halters 1 ein Vorspannmittel 17.1 und 17.2 ausgebildet, um eine Vorspannkraft auf die Stopfbuchspackungen 16.1 und 16.2 auszuüben. Jedes der Vorspannmittel 17.1 und 17.2 ist hierbei identisch ausgebildet, so dass das Vorspannmittel 17.1 nachfolgend näher erläutert ist. Das Vorspannmittel 17.1 wird durch einen ringförmigen Spannkragen 20 gebildet, der an einem Ringflansch 18 angeformt ist. Der Ringflansch 18 ist konzentrisch zum Wellenzapfen 9 über Spannschrauben 19 mit dem Halter 1 gekoppelt. Dabei wirkt der Spannkragen 20 auf eine Stirnseite der Stopibuchspackung 16.1. Die Stopfbuchspackung 16.1 wird auf der gegenüberliegenden inneren Stirnseite durch einen Ansatz 22 gehalten. Durch Verspannung der Spannschrauben 19 lässt sich der Ringflansch 18 je nach gewünschter Vorspannung der Stopfbuchspackung 16.1 an den Halter 1 befestigen. So sind Einstellungen der Stopfbuchspackungen 16.1 und 16.2 möglich, bei welchen eine absolute Dichtheit der Verteilerkammer 3 gegenüber der Umgebung gewährleistet ist. Jedoch können auch zulässige Leckagen eingestellt werden, um beispielsweise verbrauchtes Polymermaterial kontinuierlich aus der Verteilkammer 3 abführen zu können. Insoweit ist die Einstellbarkeit der Stopfbuchspackung 16.1 und 16.2 besonders vorteilhaft, um die Dichtigkeit des Rohrdrehgelenkes bei Führung von Polymerschmelzen zu gewährleisten.

Im Betrieb lässt sich bei dem in Fig. 3 dargestellten Ausführungsbeispiel eine über den Zulauf 4 zugeführte Polymerschmelze gleichmäßig an zwei Anschlussenden 14 des Anschlusskörpers 2 führen. Zur Vermeidung einer unzulässigen Axiaibewegung des Wellenzapfens kann außerhalb des Halters 1 jedem Spannkragen 20 ein Fixierkragen 23 zugeordnet sein, durch welchen der Wellenzapfen axial gesichert ist. In Fig. 3 ist der Fixierkragen 23 gestrichelt dargestellt.

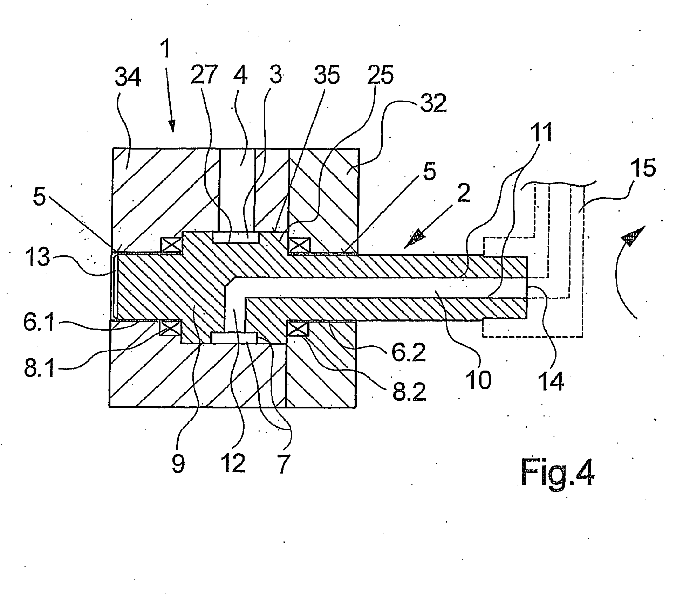

In Fig. 4 ist ein weiteres Ausführungsbeispiel des erfindungsgemäßen Rohrdrehgelenkes schematisch in einer Längsschnittansicht dargestellt.

Bei dem Ausführungsbeispiel nach Fig. 4 wird der Halter 1 durch mehrere Bauteile gebildet, wobei ein Verteilergehäuse 34 eine durchgehende Lagerbohrung 5 enthält, in welchem das Lagerende 13 des Wellenzapfens 9 gelagert ist. Stirnseitig koaxial zur Lagerbohrung 5 weist das Verteilergehäuse 34 eine Aufnahmebohrung 35 auf, in welcher ein Wellenansatz 25 des Wellenzapfens 9 geführt ist. Zur Anbindung eines Rohrstückes weist das Verteilergehäuse 34 einen im wesentlichen quer zur Lagerbohrung 5 ausgerichteten Zulauf 4 auf. Der Zulauf 4 mündet in die Aufnahmebohrung 35. Im Bereich des Zulaufs 4 ist an dem Wellenansatz 25 eine umlaufende Eindrehung 27 eingebracht, die die Verteilerkammer 3 innerhalb des Halters 1 bildet. Die Eindrehung 27 an dem Wellenansatz 25 weist im Nutgrund eine Querbohrung 12 auf, die mit einer mittleren Sacklochbohrung 11 verbunden ist und somit die Anbindung der Verteilerkammer 3 an den Verteilerkanal 10 darstellt.

Zur Lagerung des Wellenzapfens 9 ist auf der zum Anschlußende 14 des Wellenzapfens 9 eine Lagerplatte 32 vorgesehen, die mit dem Verteilergehäuse 34 verbunden ist und eine Lagerbohrung 5 zur Ausbildung der zweiten Lagerstelle 6.2 enthält.

An dem freien aus der Lagerplatte 32 herausragenden Anschlußende 14 des Wellenzapfens 9 ist ein Rohrstück 15 zur Anbindung einer Schmelzeleitung vorgesehen.

Zur Abdichtung der innerhalb des Halter ausgebildeten Verteilerkammer 3 sind zu beiden Seiten des Wellenansatzes 25 jeweils konzentrisch zur Lagerbohrung 5 Dichtungen 8.1 und 8.2 angeordnet. Zusätzlich könnten zwischen dem Wellenansatz 25 und der Aufnahmebohrung 35 Dichtspalte ausgebildet sein.

Bei dem in Fig. 4 dargestellten Ausführungsbeispiel besteht jedoch auch die Möglichkeit, dass zur Ausbildung der Verteilerkammer eine umlaufende Nut konzentrisch zur Aufnahmebohrung ausgebildet ist, die unmittelbar in die Aufnahmebohrung 35 mündet und mit dem Zulauf 4 verbunden ist. In diesem Fall würde der Wellenansatz keine umlaufende Eindrehung aufweisen.

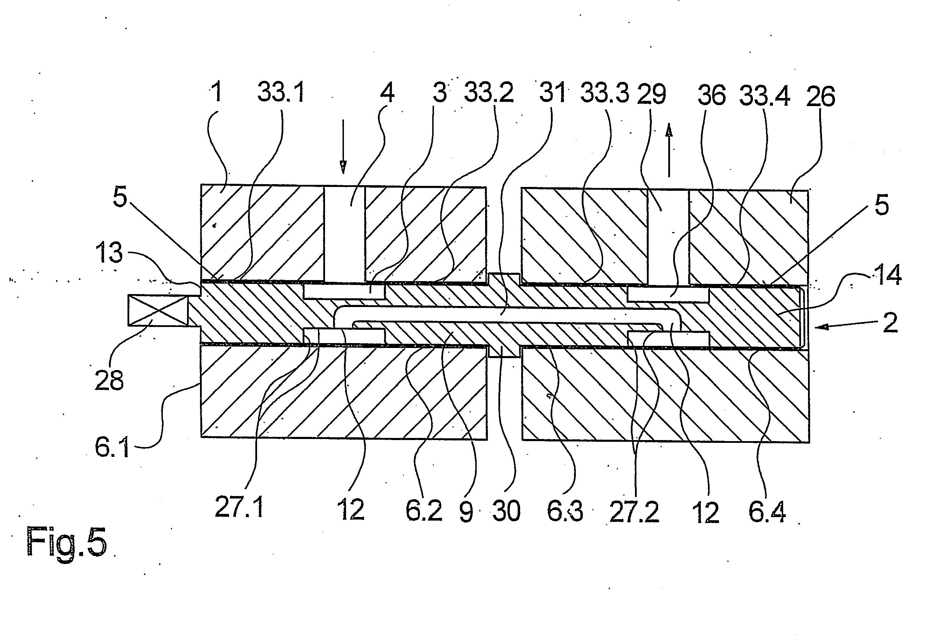

In Fig. 5 ist ein weiteres Ausführungsbeispiel einer möglichen Konstruktion des Rohrdrehgelenkes gezeigt. Das Rohrdrehgelenk ist hierbei in einer Längsschnittansicht schematisch dargestellt.

Bei dem Ausführungsbeispiel wird der Anschlusskörper 2 ebenfalls durch einen Wellenzapfen 9 gebildet, der mit einem Lagerende 13 in einem Halter 1 gelagert ist Der Halter 1 weist eine durchgehende Lagerbohrung 5 auf, in welcher der Wellenzapfen 9 in den Lagerstellen 6.1 und 6.2 gelagert ist. Zwischen den Lagerstellen weist der Wellenzapfen 9 eine Eindrehung 27.1 auf, die mit einem Zulauf 4 innerhalb des Halters 1 verbunden ist In dem Nutgrund der Eindrehung 27.1 des Wellenzapfens 9 ist eine Querbohrung 12 ausgebildet, die in eine Verteilerbohrung 31 mündet.

Das aus dem Halter 1 herausragende freie Ende 14 des Wellenzapfens 9 trägt einen beweglichen Halter 26, der eine durchgehende Lagerbohrung 5 aufweist und über das Anschlußende 14 des Wellenzapfens 9 in den Lagerstellen 6.3 und 6.4 gelagert ist. Das Anschlußende 14 des Wellenzapfens weist zwischen den Lagerstellen 6.3 und 6.4 eine zweite Eindrehung 27.2 auf, die im Nutgrund über eine Querbohrung 12 mit der Verteilerbohrung 31 verbunden ist Der bewegliche Halter 26 weist einen Ablauf 29 zum Anschluß eines Rohrstückes auf, welcher die Eindrehung 27.2 des Wellenzapfens 9 mündet. Die Eindrehung 27.2 am Umfang des Wellenzapfens 9 bildet eine Verteilerkammer 36.

Zwischen dem Lagerende 13 und dem Anschlußende 14 weist der Wellenzapfen 9 einen umlaufenen Trennsteg 30 auf, durch welche eine axiale Absicherung gegeben ist. Der Trennsteg 30 ist außerhalb der Lagerbohrungen 5 zwischen dem Halter 1 und dem beweglichen Halter 26 ausgebildet

An dem Lagerende 13 des Wellenzapfens ist ein Antriebsadapter 28 vorgesehen, durch welchen ein Drehantrieb mit dem Wellenzapfen 9 verbunden werden kann. Damit lässt sich vorteilhaft ein Festsetzen des Wellenzapfens 9 innerhalb des Halters 1 vermeiden.

Die Funktion der in Fig. 5 dargestellten Ausführung des Rohrdrehgelenkes ist im wesentlichen identisch zu den vorhergehenden Ausführungsbeispielen, so dass durch eine stationäre Schmelzezufuhrleitung über den Zulauf 4 eine Polymerschmelze zugeführt wird. Dabei gelangt die Polymerschmelze über die Verteilerkammer 3 und den Verteilerkanal 31 zu der Ablaufkammer 36 und den daran angeschlossenen Ablauf 29. Hierbei erfolgt die Schmelzeverteilung unabhängig von der Stellung des Wellenzapfens und unabhängig von den Relativstellungen des Halters 1 und des Halters 29 zueinander. Zur Abdichtung der Verteilerkammer 3 sowie der an dem Anschlußende ausgebildeten Ablaufkammer 36 sind zwischen den Wellenzapfen 9 und dem Halter 1 die Spaltdichtungen 33.1 und 33.2 sowie zwischen dem Halter 26 und dem Wellenzapfen 9 die Spaltdichtungen 33.3 und 33.4 ausgebildet.

Die in den Fig. 1 bis 5 dargestellten Ausführungsbeispiele sind nur beispielhaft in ihrem Aufbau und Ausgestaltung der einzelnen Bauteile. Grundsätzlich lässt sich beispielsweise das Dichtungskonzept des Ausführungsbeispiels nach Fig. 1 oder 3 in dem Ausführungsbeispiel nach Fig. 5 verwirklichen.

### Bezugszeichenliste

- 1: Halter
- 2: Anschlusskörper
- 3: Verteilerkammer
- 4: Zulauf
- 5: Lagerbohrung
- 6.1,6.2: Lagerstelle
- 7: Wandung
- 8.1,8.2: Dichtung
- 9: Wellenzapfen
- 10: Verteilerkanal
- 11: Sacklochbohrung
- 12: Querbohrung
- 13: Lagerende
- 14, 14.1, 14.2: Anschlussende
- 15: Rohrstück
- 16.1, 16.2: Stopfbuchspackung
- 17.1, 17.2: Vorspannmittel
- 18: Ringflansch
- 19: Spannschraube
- 20: Spannkragen
- 21: Durchgangsbohrung
- 22: Ansatz
- 23: Fixierkragen
- 24: Heizelement
- 25: Wellenansatz
- 26: beweglicher Halter
- 27.1,27.2: Eindrehung
- 28: Antriebsadapter
- 29: Ablauf
- 30: Trennsteg
- 31: Verteilerbohrung
- 32: Lagerplatte
- 33.1,33.2: Spaltdichtung
- 34: Verteilergehäuse
- 35: Aufnahmebohrung
- 36: Ablaufkammer

## Patentansprüche

1. Führung einer Polymerschmelze bei Temperaturen oberhalb von 250° C und Drücken oberhalb von 200 bar umfassend ein Rohrdrehgelenk mit einem Halter (1), welcher eine Verteilerkammer (3) mit einem Zulauf (4) aufweist, und mit einem beweglichen Anschlusskörper (2) mit einem innen liegenden Verteilerkanal (10), wobei der Anschlusskörper (2) mit einem Lagerende (13) drehbar mit dem Halter (1) verbunden ist und mit einem gegenüberliegenden Anschlussende (14) mit einem Rohrstück (15) kuppelbar ist und wobei die Verteilerkammer (3) des Halters (1) mit dem Verteilerkanal (10) des Anschlusskörpers (2) verbunden ist, wobei das Lagerende (13) des Anschlusskörpers (2) als ein Wellenzapfen (9) ausgebildet ist, **dadurch gekennzeichnet, dass** der Wellenzapfen (9) in einer die Verteilerkammer (3) durchdringenden oder einschließenden Lagerbohrung (5) im Halter (1) im wesentlichen konzentrisch drehbar gelagert ist, so dass in jeder Stellung des Wellenzapfens (9) eine Verbindung zwischen der Verteilerkammer (3) und dem Verteilerkanal (10) vorhanden ist.

2. Führung mit Rohrdrehgelenk nach Anspruch 1, **dadurch gekennzeichnet, dass** die Lagerbohrung (5) zur Bildungen von zwei Lagerstellen (6.1, 6.2) den Halter (1) vollständig durchdringt, wobei der Wellenzapfen (9) in den Lagerstellen (6.1, 6.2) mit im wesentlichen gleichgroßen Wellendurchmesser gelagert ist.

3. Führung mit Rohrdrehgelenk nach Anspruch 2, **dadurch gekennzeichnet, dass** in den Lagerstellen (6.1, 6.2) zwischen dem Halter (1) und dem Wellenzapfen (9) jeweils eine gegenüber der Verteilerkammer (3) wirksamen Dichtung (8.1, 8.2) angeordnet ist.

4. Führung mit Rohrdrehgelenk nach Anspruch 3, **dadurch gekennzeichnet, dass** die Dichtungen in den Lagerstellen (6.1, 6.2) durch jeweils eine Stopfbuchspackung (16.2, 16.2) oder eine Spaltdichtung (33.1, 33.2) gebildet ist.

5. Führung mit Rohrdrehgelenk nach Anspruch 4, **dadurch gekennzeichnet, dass** die Stopfbuchspackungen (16.1, 16.2) in den Lagerstellen (6.1; 6.2) durch jeweils ein verstellbares Vorspannmittel (17.1, 17.2) gehalten sind.

6. Führung mit Rohrdrehgelenk nach Anspruch 1 oder 2, **dadurch gekennzeichnet, dass** der Wellenzapfen (9) durch eine Gleitlagerabstützung in dem Halter (1) gelagert ist.

7. Führung mit Rohrdrehgelenk nach einem der Ansprüche 1 bis 6, **dadurch gekennzeichnet, dass** die Verteilerkammer (3) innerhalb des Halters (1) durch eine den Wellenzapfen (9) im wesentlichen konzentrisch umschließende Nut (7) gebildet ist.

8. Führung mit Rohrdrehgelenk nach einem der Ansprüche 1 bis 6, **dadurch gekennzeichnet, dass** die Verteilerkammer (3) innerhalb des Halters (1) durch eine am Umfang des Wellenzapfens (9) umlaufende Eindrehung (27.1) gebildet ist.

9. Führung mit Rohrdrehgelenk nach einem der Ansprüche 1 bis 8, **dadurch gekennzeichnet, dass** der Verteilerkanal (10) des Anschlusskörpers (2) durch eine Sacklochbohrung (11) vom Anschlussende (14) bis zum Wellenzapfen (9) gebildet ist, deren geschlossenes Bohrende im Wellenzapfen (9) durch eine Querbohrung (12) mit der Verteilerkammer (3) verbunden ist.

10. Führung mit Rohrdrehgelenk nach einem der Ansprüche 1 bis 6, **dadurch gekennzeichnet, dass** der Verteilerkanal (10) des Anschlusskörpers (2) durch eine Durchgangsbohrung (21) vom Anschlussende (14.1) zu einem zweiten gegenüberliegenden Anschlussende (14.2) gebildet ist, die im Bereich des Wellenzapfens (9) durch eine Querbohrung (12) mit der Verteilerkammer (3) verbunden ist.

## Claims

1. Guide of a polymer melt at temperatures above 250° C and pressures above 200 bar comprising a tubular rotary joint with a holder (1), which comprises a distribution chamber (3) having a feeder (4), and a mobile connection body (2) having a distribution channel (10) located within, wherein the connection body (2) is rotatably connected to the holder (1) by means of one bearing end (13) and can be coupled to a pipe section (15) by means of the opposite connection end (14) and wherein the distribution chamber (3) of the holder (1) is connected to the distribution channel (10) of the connection body (2), whereby the bearing end (13) of the connection body (2) is designed as a shaft journal (9), **characterized in that** the shaft journal (9) is substantially concentrically rotatably mounted in a bearing bore (5) in the holder (1), which bearing bore (5) penetrates or encloses the distribution chamber (3), such that in each position of the shaft journal (9) a connection between the distribution chamber (3) and the distribution channel (10) is maintained.

2. Guide with tubular rotary joint according to claim 1, **characterized in that** the bearing bore (5) completely penetrates the holder (1) to form two bearing points (6.1, 6.2), wherein the shaft journal (9) is mounted in the bearing points (6.1, 6.2) such that its shaft diameter is substantially of equal size.

3. Guide with tubular rotary joint according to claim 2, **characterized in that** seals (8.1, 8.2) are disposed in the bearing points (6.1, 6.2) between the holder (1) and the shaft journal (9), each of which seals (8.1, 8.2) is effective for sealing the distribution chamber (3).

4. Guide with tubular rotary joint according to claim 3, **characterized in that** the seals in the bearing points (6.1, 6.2) are each formed by a packing gland (16.2, 16.2) [sic: 16.1, 16.2] or a gap seal (33.1, 33.2).

5. Guide with tubular rotary joint according to claim 4, **characterized in that** the packing glands (16.1, 16.2) are each held in the bearing points (6.1, 6.2) by means of an adjustable pre-tensioning means (17.1, 17.2).

6. Guide with tubular rotary joint according to claim 1 or 2, **characterized in that** the shaft journal (9) is mounted in the holder (1) by means of a slide bearing support.

7. Guide with tubular rotary joint according to one of the claims 1 to 6, **characterized in that** the distribution chamber (3) is formed within the holder (1) by means of a groove (7), which surrounds the shaft journal (9) substantially concentrically.

8. Guide with tubular rotary joint according to one of the claims 1 to 6, **characterized in that** the distribution chamber (3) is formed within the holder (1) by means of a recess (27.1), which extends around the circumference of the shaft journal (9).

9. Guide with tubular rotary joint according to one of the claims 1 to 8, **characterized in that** the distribution channel (10) of the connection body (2) is formed by means of a blind hole (11) from the connection end (14) up to the shaft journal (9), and the closed end of the blind hole in the shaft journal (9) is connected by means of a cross hole (12) to the distribution chamber (3).

10. Guide with tubular rotary joint according to one of the claims 1 to 6, **characterized in that** the distribution channel (10) of the connection body (2) is formed by means of a through-hole (21) from the connection end (14.1) to a second opposite connection end (14.2), which through-hole (21) is connected by means of a cross hole
(12) to the distribution chamber (3) in the region of the shaft journal (9).

## Revendications

1. Le guidage de polymères à l'état fondu à des températures au dessus de 250 °C et des pressions au dessus de 200 bar, comprenant une articulation rotoïde tubulaire avec un support (1), qui a une chambre de distribution (3) avec une amenée (4), et avec un corps de raccord mobile (2) ayant un canal de distribution (10) se trouvant à l'intérieur, le corps de raccord (2) étant relié de façon rotative au support (1) avec une extrémité de palier (13) et pouvant être couplé à une extrémité de raccord opposée (14) à l'intermédiaire d'un tronçon tubulaire (15), et dans quel cas la chambre de distribution (3) du support (1) est reliée au canal de distribution (10) du corps de raccord (2), l'extrémité de palier (13) du corps de raccord (2) étant réalisée en tant que tourillon d'arbre (9), **caractérisé en ce que** le tourillon d'arbre (9) est monté de manière rotative sensiblement concentrique dans le support (1) dans un trou de palier (5) qui pénètre la chambre de distribution (3) ou inclut celle-ci, de sorte que dans chaque position du tourillon d'arbre (9) il existe une liaison entre la chambre de distribution (3) et le canal de distribution (10).

2. Direction avec articulation rotoïde tubulaire selon la revendication 1, **caractérisée en ce que** pour former deux points d'appui (6.1, 6.2) le trou de palier (5) pénètre complètement le support (1), le tourillon d'arbre (9) étant supporté dans les points d'appui (6.1, 6.2) avec un diamètre d'arbre sensiblement identique.

3. Direction avec articulation rotoïde tubulaire selon la revendication 2, **caractérisée en ce que** dans les points d'appui (6.1, 6.2) entre le support (1) et le tourillon d'arbre (9) respectivement un joint (8.1, 8.2) est agencé qui est efficace par rapport à la chambre de distribution (3).

4. Direction avec articulation rotoïde tubulaire selon la revendication 3, **caractérisée en ce que** les joints dans les points d'appui (6.1, 6.2) sont formés respectivement par un paquet de calotte d'obturation (16.2, 16.2) ou par un joint d'interstice (33.1, 33.2).

5. Direction avec articulation rotoïde tubulaire selon la revendication 4, **caractérisée en ce que** dans les points d'appui (6.1, 6.2) les paquets de calottes d'obturation (16.1, 16.2) sont supportés par respectivement un moyen de précontrainte ajustable (17.1, 17.2).

6. Direction avec articulation rotoïde tubulaire selon la revendication 1 ou 2, **caractérisée en ce que** le tourillon d'arbre (9) est disposé dans le support (1) par un renfort de palier lisse.

7. Direction avec articulation rotoïde tubulaire selon l'une des revendications 1 à 6, **caractérisée en ce qu'**à l'intérieur du support (1) la chambre de distribution (3) est formée par une rainure (7) entourant de manière sensiblement concentrique le tourillon d'arbre (9).

8. Direction avec articulation rotoïde tubulaire selon l'une des revendications 1 à 6, **caractérisée en ce qu'**à l'intérieur du support (1) la chambre de distribution (3) est formée par une gorge (27.1) qui s'étend de manière périphérique sur la périphérie du tourillon d'arbre (9).

9. Direction avec articulation rotoïde tubulaire selon l'une des revendications 1 à 8, **caractérisée en ce que** le canal de distribution (10) du corps de raccord (2) est formé par un trou borgne (11) depuis l'extrémité de raccord (14) jusqu'au tourillon d'arbre (9), trou borgne dont l'extrémité de perçage fermée est reliée à la chambre de distribution (3) par un perçage transversal (12).

10. Direction avec articulation rotoïde tubulaire selon l'une des revendications 1 à 6, **caractérisée en ce que** le canal de distribution (10) du corps de raccord (2) est formé par un perçage de passage (21) depuis l'extrémité de raccord (14.1) jusqu'à une deuxième extrémité de raccord opposée (14.2), qui dans la région du tourillon d'arbre (9) est reliée à la chambre de distribution (3) par un perçage transversal (12).
